# EUROPÄISCHE PATENTSCHRIFT

(11) **EP 2 694 324 B1**
(45) Veröffentlichungstag und Bekanntmachung des Hinweises auf die Patenterteilung: **21.01.2015**
(21) Anmeldenummer: 12707493.8
(22) Anmeldetag: 06.03.2012
(51) Int. Cl.: B60N 2/07, B60N 2/08

(54) **FAHRZEUGSITZ**
VEHICLE SEAT
SIÈGE DE VÉHICULE

(30) Priorität: 07.04.2011 DE 102011017378
(43) Veröffentlichungstag der Anmeldung: 12.02.2014
(73) Patentinhaber: Johnson Controls Components GmbH & Co. KG, 67657 Kaiserslautern (DE)
(72) Erfinder: UTZINGER, Karl, 66919 Weselberg (DE)
(86) Internationale Anmeldenummer: PCT/EP2012/000988
(87) Internationale Veröffentlichungsnummer: WO 2012/136294

(56) Entgegenhaltungen:
- WO-A1-2010/051903
- DE-A1- 10 050 959

## Beschreibung

Die Erfindung betrifft einen Längseinsteller für einen Fahrzeugsitz mit den Merkmalen des Oberbegriffs des Anspruches 1. Die Erfindung betrifft auch einen Fahrzeugsitz mit den Merkmalen des Anspruchs 10.

### Stand der Technik

Aus der WO 2010 051903 A1 ist ein Längseinsteller für einen Fahrzeugsitz mit einer ersten und einer zweiten Sitzschiene bekannt. Hierbei ist eine lösbare Verriegelungsvorrichtung zum lösbaren Verriegeln der Position der ersten Sitzschiene gegenüber der zweiten Sitzschiene vorgesehen, wobei die ersten Sitzschiene mit Rasten ausgebildet ist, welche in wenigstens einer in Sitzlängsrichtung verlaufenden Reihe angeordnet sind, und jede Raste in Sitzlängsrichtung eine vordere Flanke und eine hintere Flanke aufweist.

Wenigstens zwei Rastplatten sind zum Verriegeln der ersten Sitzschiene mit der zweiten Sitzschiene vorgesehen, wobei die Rastplatten in der zweiten Sitzschiene in Verriegelungsrichtung beweglich gelagert sind und Zähne zum Einfallen in die Rasten der ersten Sitzschiene aufweisen. Die Führung in der zweiten Sitzschiene erfolgt mittels eines Führungsstiftes, welcher in der Verriegelungsrichtung vom Grundkörper der Rastplatte absteht und mit Spiel durch eine Führungsöffnung in der zweiten Sitzschiene greift.

Eine Zugfeder, die einerseits an der zugeordneten Rastplatte und andererseits an der zweiten Sitzschiene eingehängt ist, spannt die Rastplatte in Verriegelungsrichtung gegen die zweite Sitzschiene vor. Zur Entriegelung des Längseinstellers sind an jeder zweiten Sitzschiene eine schwenkbar gelagerte Entriegelungsklappe und zwischen den beiden zweiten Sitzschienen ein in Querrichtung verlaufendes, schwenkbar gelagertes Querrohr mit je einem nach hinten abstehenden Arm auf jeder Fahrzeugsitzseite und mit einem nach vorne abstehenden Hebel zwischen den beiden Fahrzeugsitzseiten, welcher an dem in Sitzlängsrichtung vorderen Ende des Fahrzeugsitzes zugänglich ist, vorgesehen.

Durch Schwenken des Hebels nach oben dreht sich das Querrohr und schwenkt die beiden Arme nach unten. Jeder Arm beaufschlagt die zugeordnete Entriegelungsklappe, welche ihrerseits die Führungsstifte der drei zugeordneten Rastplatten beaufschlagt, so dass letztere entgegen der Verriegelungsrichtung bewegt werden und dadurch die Rasten verlassen. Die zweiten Sitzschienen können dann relativ zueinander verschoben werden.

Ein gattungsgemässer Längsversteller ist aus dem Dokument DE10050959A bekannt.

### Aufgabe

Der Erfindung liegt die Aufgabe zu Grunde, einen Längseinsteller für einen Fahrzeugsitz der eingangs genannten Art zu verbessern.

### Lösung

Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Erfindungsgemäß ist hierbei ein Viergelenk, insbesondere ein Parallelogramm, innerhalb der zweiten Sitzschiene vorgesehen ist, welches mit der oder den Rastplatten zum Entriegeln des Längseinstellers zusammenwirkt. Diese Anordnung lässt sich vollständig innerhalb des Sitzschienenprofils anordnen, so dass sich eine geschützte Position in Verbindung mit einem geringen Bauraumbedarf ergibt.

Bevorzugt sind hierbei zwei mit einem Ende verschwenkbar schienenfeste Koppelelemente vorgesehen, deren andere Enden in Verbindung mit einem Anschlag stehen, welcher relativ zu der oder den Rastplatten beweglich ist, insbesondere die Rastplatten zum Entriegeln aus ihrer Verriegelungsstellung bewegt.

Die Betätigung des Viergelenks erfolgt vorzugsweise über eine Getriebeverbindung, insbesondere ein an einem Antriebselement ausgebildeten Zahnradbereich, welcher mit seiner Außenverzahnung mit Verzahnungen zusammenwirkt, die auf entgegengesetzten Seiten innerhalb von Langlöchern angeordnet sind.

Der Längseinsteller weist vorzugsweise eine Memory-Vorrichtung auf, welche bei einem Entriegeln der Verriegelungsvorrichtung über eine zweite Betätigungseinrichtung aktiviert wird, welche von der normalen, manuellen ersten Betätigungseinrichtung, insbesondere gebildet durch einen sitzfesten Griff, verschieden ist.

Ein Fahrzeugsitz mit einer entsprechendem Längseinsteller kann beispielsweise bei einem Personenkraftfahrzeug oder einem Nutzfahrzeug verwendet werden, wobei es sich nicht notwendigerweise um den Fahrersitz handeln muss. Ein derartiger Fahrzeugsitz ist vorzugsweise in einer vorderen Sitzreihe vorgesehen, er kann aber auch in einer mittleren oder hinteren Sitzreihe vorgesehen sein, beispielsweise auch bei einen Van.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Fig. 1:: eine perspektivische ausschnittsweise Ansicht eines verriegelten Sitzschienenpaares für einen längseinstellbaren Fahrzeugsitz mit einer Verriegelungsvorrichtung gemäß dem ersten Ausführungsbeispiel,
- Fig. 2:: eine Fig. 1 entsprechende Ansicht ohne Darstellung der Sitzschienen,

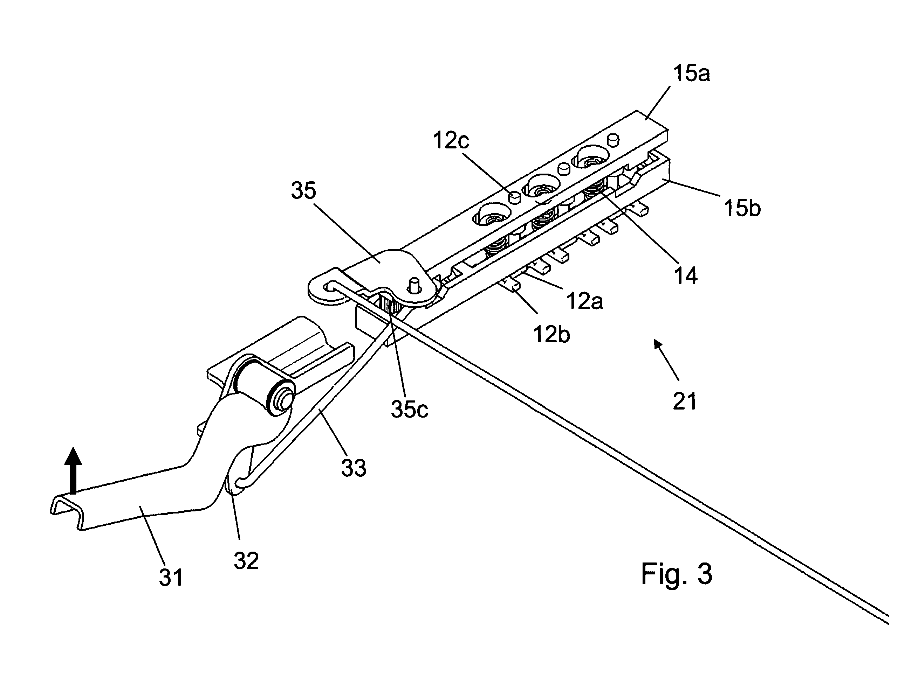

- Fig. 3:: eine Fig. 2 entsprechende Ansicht in entriegelter Stellung ,
- Fig. 4:: eine Explosionsdarstellung entsprechend Fig. 2,
- Fig. 5:: einen schematischen Längsschnitt durch die Verriegelungsvorrichtung in verriegelter Stellung,
- Fig. 6:: einen schematischen Längsschnitt durch die Verriegelungsvorrichtung in entriegelter Stellung mit schematischer Darstellung zweiter Zugfedern,

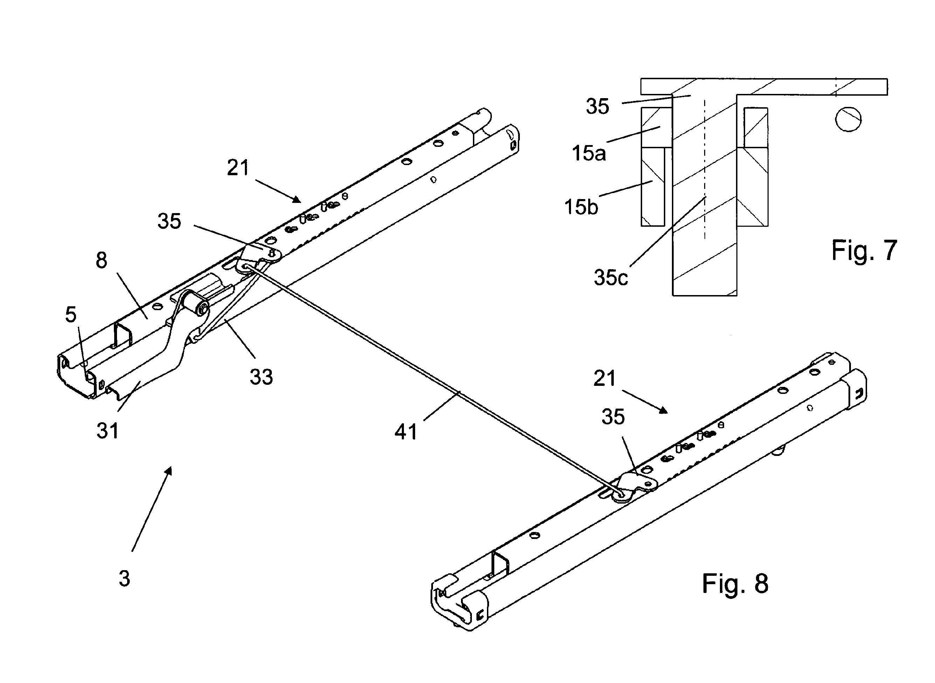

- Fig. 7:: einen schematischen Schnitt quer durch die Verriegelungsvorrichtung in verriegelter Stellung,
- Fig. 8:: eine perspektivische Gesamtansicht des Sitzschienenpaares von Fig. 1 und des zweiten Sitzschienenpaares des Fahrzeugsitzes,
- Fig. 9:: eine perspektivische ausschnittsweise Ansicht eines verriegelten Sitzschienenpaares für einen längseinstellbaren Fahrzeugsitz mit einer Verriegelungsvorrichtung gemäß dem zweiten Ausführungsbeispiel,
- Fig. 10:: eine Fig. 9 entsprechende Ansicht in einer aufgrund eines Vorschwenkens der Lehne entriegelten Stellung,
- Fig. 11:: eine Detailansicht von Fig. 9,
- Fig. 12:: eine Detailansicht von Fig. 10,
- Fig. 13:: eine Fig. 9 entsprechende Ansicht,
- Fig. 14:: eine Fig. 9 entsprechende Ansicht in einer aufgrund einer Betätigung des Griffs entriegelten Stellung,
- Fig. 15:: eine Detailansicht von Fig. 13,
- Fig. 16:: eine Detailansicht von Fig. 14 und
- Fig. 17:: eine schematische Seitenansicht eines Fahrzeugsitzes mit zwei Sitzschienenpaaren.

Ein Fahrzeugsitz 1 eines Kraftfahrzeuges weist einen Längseinsteller 3 auf, mittels dessen der Fahrzeugsitz 1 längseinstellbar ist, d.h. dessen Sitzlängsposition in Sitzlängsrichtung x einstellbar ist. Die Sitzlängsrichtung x verläuft in der Regel parallel zur Fahrtrichtung. Der manuell betätigbare Längseinsteller 3 weist auf beiden Fahrzeugsitzseiten je eine erste Sitzschiene 5, die mit der Fahrzeugstruktur des Kraftfahrzeuges verbunden wird, und je eine zweite Sitzschiene 8 auf, die relativ zur zugeordneten ersten Sitzschiene 5 in Sitzlängsrichtung x verschieblich und mit dieser ersten Sitzschiene 5 verriegelbar ist.

Dabei umgreifen sich die erste Sitzschiene 5 und die zweite Sitzschiene 8 gegenseitig mit ihren im wesentlichen U-förmigen Profilen mit nach innen bzw. nach außen gebogenen Längsrändern unter Zwischenlage von nicht näher dargestellten Kugeln. Die Kugeln dienen sowohl der gegenseitigen Führung als auch der Verringerung der Reibung zwischen den Sitzschienen 5 und 8.

Im vorliegenden Ausführungsbeispiel sind auf jeder Fahrzeugsitzseite in jeder der vier Ecken des gemeinsamen Sitzschienenprofils der beiden metallischen Sitzschienen 5 und 8 zwei Pakete zu je drei Kugeln mit bestimmten Abständen in Sitzlängsrichtung x hintereinander angeordnet, wobei die metallischen Kugeln von insgesamt zwei Kugelhalten aus Kunststoff gehalten werden.

Zum Verriegeln von erster Sitzschiene 5 und zweiter Sitzschiene 8 sind auf jeder Fahrzeugsitzseite drei Rastplatten 12 vorgesehen, welche jeweils in der Verriegelungsrichtung z in der zweiten Sitzschiene 8 beweglich geführt sind und zum Zusammenwirken mit der ersten Sitzschiene 5 ausgebildet sind. Jede Rastplatte 12 weist einen flachen Grundkörper 12a auf, welcher sich in Sitzlängsrichtung x erstreckt und von welchem auf beiden Längsseiten des Grundkörpers 12 vorliegend je genau zwei Zähne 12b in einer Querrichtung y abstehen, also ein in Sitzlängsrichtung x vorderer Zahn 12b und ein in Sitzlängsrichtung x hinterer Zahn 12b. Alternativ können die Rastplatten auch eine andere Anzahl an Zähnen aufweisen.

Die Rastplatten 12 sind über Zugfedern 14, die einerseits an der zugeordneten Rastplatte 12 und an einem fest mit der zweiten Sitzschiene 8 verbundenen Grundträger 15a eingehängt sind, in der zweiten Sitzschiene positioniert. Die Zugfedern können alternativ auch direkt in der zweiten Sitzschiene 8 eingehängt sein. Die Zugfedern 14 spannen die Rastplatten 12 in Verriegelungsrichtung z gegen die zweite Sitzschiene 8 vor, wobei die Position der Rastplatten 12 in Verriegelungsrichtung z durch einen rahmenartig ausgebildeten Anschlag 15b, auf dessen weitere Funktion an späterer Stelle näher eingegangen wird, veränderbar ist.

Im verriegelten Ruhezustand liegt der Anschlag 15b jedoch nicht an den Rastplatten 12 an, sondern ist im Idealfall ganz hochgezogen, so dass er am Grundträger 15a anliegt. Die Rastplatten 12 werden in ihrer Bewegung nach oben durch ihren Eingriff in die erste Sitzschiene 5 begrenzt.

Die Führung der Rastplatten 12 in der zweiten Sitzschiene 8 erfolgt mittels jeweils eines Führungsstiftes 12c, welcher in der Verriegelungsrichtung z vom Grundkörper 12a der Rastplatte 12 absteht und mit Spiel durch eine Führungsöffnung 15a' im Grundträger 15a und eine hiermit fluchtende Führungsöffnung 8a in der zweiten Sitzschiene 8 greift. Die Führungsöffnungen 8a, 15a' sind vorzugsweise mit einem etwas größeren Querschnitt als der Führungsstift 12c ausgebildet, um Spielausgleichsmöglichkeiten zu schaffen.

Die Sitzlängsrichtung x, die Querrichtung y und die Verriegelungsrichtung z stehen senkrecht zueinander und bilden ein Rechtssystem. Jeder Zahn 12b ist vorliegend sowohl in der x-z-Ebene als auch in der x-y-Ebene rechteckförmig profiliert, wobei alle Zähne die gleichen Abmessungen aufweisen. In Hinblick auf die Funktion der Rastplatten 12 in Verbindung mit den Sitzschienen 5, 8 als Verriegelungsvorrichtung 21 sei auf die DE 100 50 959 B4 verwiesen, deren diesbezüglicher Offenbarungsgehalt ausdrücklich einbezogen wird.

Zur Entriegelung der Längseinsteller 3 ist auf einer Sitzseite benachbart des entsprechenden Sitzschienenpaares 5, 8 ein Griff 31 vorgesehen, der um eine in Querrichtung y verlaufende Achse, gebildet durch einen schienenfesten Halter mit Lagerbolzen und Lagerbuchsen, verschwenkbar an der zweiten Sitzschiene 8 angebracht ist. Der Griff 31 bildet eine (erste) Betätigungseinrichtung, um die Verriegelungsvorrichtung 21 zu entriegeln. Am Griff 31 ist ein sich in radialer Richtung von der Achse erstreckender, in Benutzungsstellung im Wesentlichen nach unten in Verriegelungsrichtung z verlaufend angeordneter Hebelarm 32 ausgebildet, an dessen freien Ende eine erste Übertragungsstange 33 verschwenkbar bezüglich des Hebelarms 32 angebracht ist.

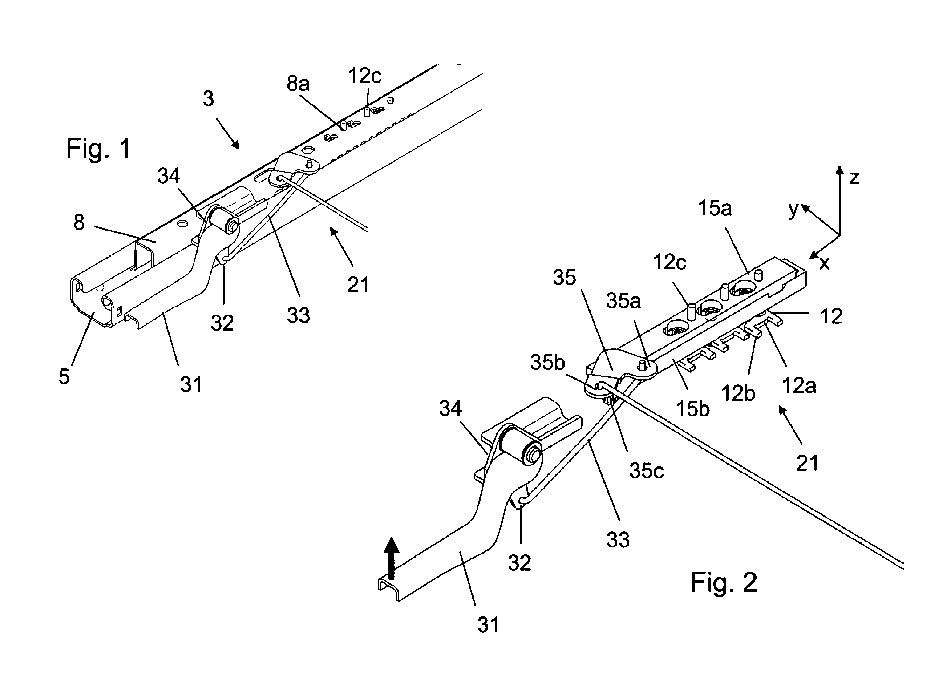

Für die Rückstellung des Griffs 31 in die in Fig. 1 dargestellte Ausgangsstellung ist eine Rückstellfeder 34 vorgesehen, welche um den Lagerbolzen verlaufend angeordnet ist und sich am Halter sowie am Griff 31 abstützt. Im Folgenden wird zuerst der Aufbau und die Funktion der Sitzschienenverriegelung des griffnahen Sitzschienenpaares 5, 8 beschrieben.

Die erste Übertragungsstange 33 ist in eine Eingriffsöffnung 35a' in einem ersten Arm 35a eines Antriebselements 35 eingehängt, welcher in der x-y-Ebene angeordnet ist. Das Antriebselement 35 weist einen zweiten Arm 35b auf, welcher sich etwa in einem rechten Winkel in Bezug auf den ersten Arm 35a, ebenfalls innerhalb der x-y-Ebene erstreckt. Der zweite Arm 35b dient einer Bewegungsübertragung auf die Verriegelung des zweiten Sitzschienenpaares 5, 8, auf welche an späterer Stelle näher eingegangen wird.

Im zentralen Bereich des Antriebselements 35 erstreckt sich ein zylinderförmiger, mit einer Verzahnung ausgebildeter Betätigungsbereich 35c in Verriegelungsrichtung z nach unten. Die beiden Arme 35a, 35b erstrecken sich in radialer Richtung in Bezug auf die Mittellängsachse des Betätigungsbereichs 35c. Der Betätigungsbereich 35c ragt durch entsprechende Öffnungen in der zweiten Sitzschiene 8, dem Grundträger 15a und dem Anschlag 15b. Hierbei entsprechen sich vorliegend die Öffnungen in der zweiten Sitzschiene 8 und die Öffnung im hieran fest angebrachten Grundträger 15a, wobei die Öffnung 15a" im Grundträger 15a als Langloch ausgebildet ist, an dessen einer Längsseite eine Verzahnung 15a"' ausgebildet ist, mit welcher die Verzahnung des Betätigungsbereichs 35c in Eingriff steht.

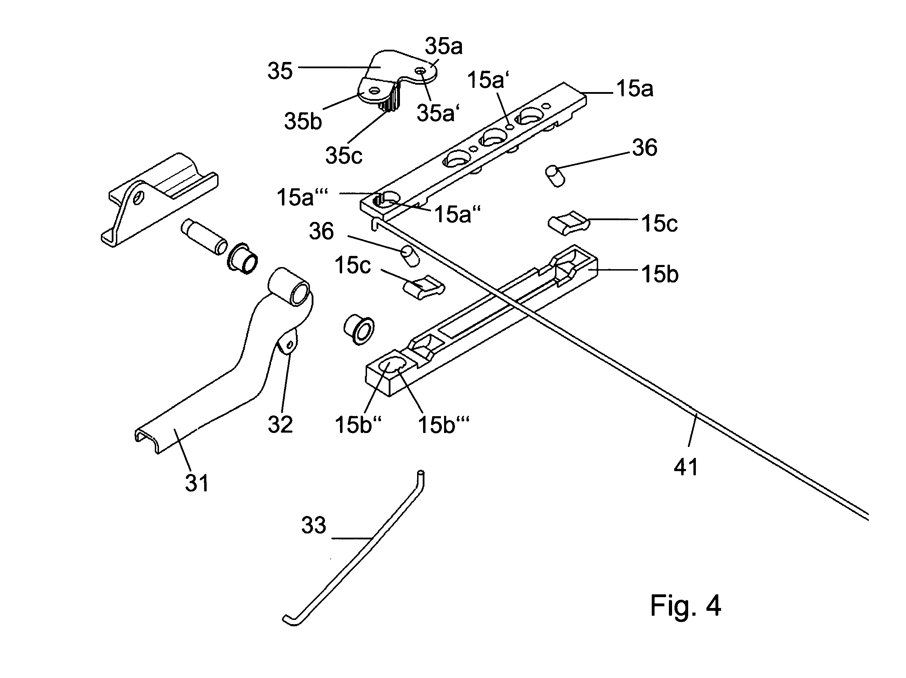

Die Verzahnung 15a'" ist im vorliegenden Fall auf der in verriegelter Stellung des Sitzschienenpaares 5, 8 den Armen 35a, 35b abgewandten Seite angeordnet, wie aus Fig. 4 ersichtlich. Die Öffnung 15b" im Anschlag 15b ist als Langloch entsprechender Größe ausgebildet, wobei eine Verzahnung 15b'" auf der der Verzahnung 15a'" entgegengesetzten Seite des Langlochs angeordnet ist, mit welcher die Verzahnung des Betätigungsbereichs 35c ebenfalls in Eingriff steht.

Durch eine Drehbewegung um die z-Achse des Betätigungsbereichs 35c bewegen sich somit - relativ zum Betätigungsbereich 35c betrachtet - der Grundträger 15a in eine Richtung und der Anschlag 15b in die entgegengesetzte Richtung. Da der Grundträger 15a schienenfest ist, bewegen sich jedoch sowohl der Betätigungsbereich 35c um eine erste Wegstrecke L1 als auch der Anschlag 15b um eine zweite Wegstrecke L2, wobei die zweite Wegstrecke L2, welche der Relativverschiebung in Sitzlängsrichtung x zwischen dem Grundträger 15a und dem Anschlag 15b entspricht, doppelt so groß ist wie die erste Wegstrecke L1 relativ zur zweiten Sitzschiene 8.

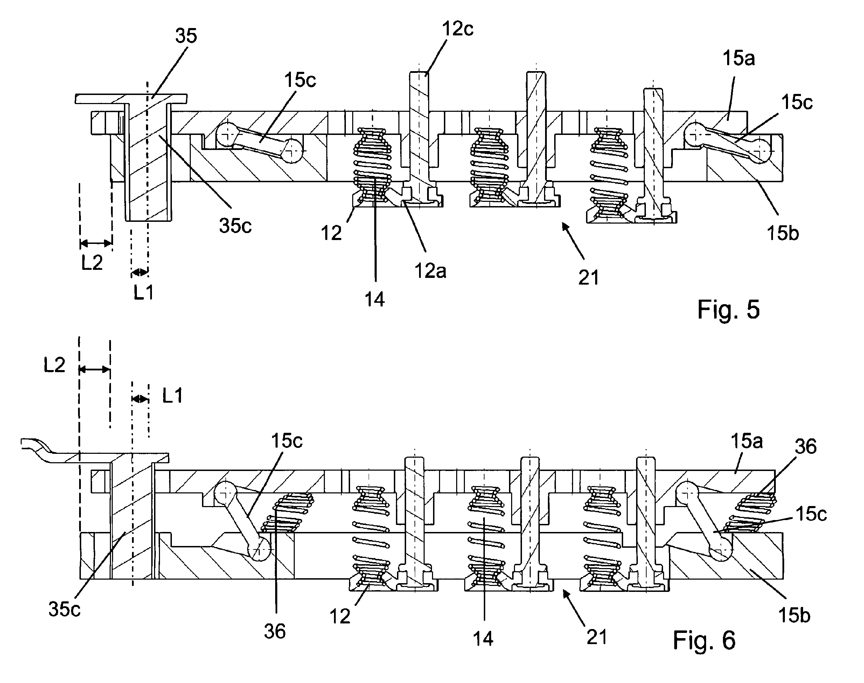

Der Grundträger 15a und der Anschlag 15b sind ferner über zwei knochenartige Koppelelemente 15c miteinander in Gestalt eines Parallelogramms verbunden, wobei die Koppelelemente 15c jeweils um die y-Achse verschwenkbar sowohl am Grundträger 15a als auch am Anschlag 15b angeordnet sind. Das Vorspannen des Anschlags 15b in Richtung des Grundträgers 15a erfolgt mittels zweier zweiter Zugfedern 36, welche zwischen dem Grundträger 15a und dem Anschlag 15b angebracht sind. Die Zugfedern 36 sind in Fig. 6 nur schematisch eingezeichnet. Bevorzugt sind sie etwa in einem 90°-Winkel in Bezug auf die Koppelelemente 15c angeordnet.

Erfolgt nach einer Betätigung des Griffs 31 und damit einem Drehen des Antriebselements 35 über den Betätigungsbereich 35c, ausgehend von der verriegelten Stellung (siehe Fig. 5) durch das Abwälzen der Verzahnung des Betätigungsbereichs 35c in den Verzahnungen 15a'" und 15b'" eine relative Verschiebung von Grundträger 15a und Anschlag 15b um die zweite Wegstrecke L2, so erfolgt gleichzeitig über die Koppelelemente 15c, welche sich beim Entriegeln aufstellen, auch eine Relativverschiebung von Grundträger 15a und Anschlag 15b in Verriegelungsrichtung z (siehe Fig. 6), wobei sich auch der Eingriffsbereich der Verzahnung 15b"' in den Betätigungsbereich 35c nach unten verschiebt.

Der Anschlag 15b gelangt spätestens beim Absenken mit seiner Unterseite von oben her in Kontakt mit allen Rastplatten 12 und drückt diese nach unten - entgegen der Vorspannung der Zugfedern 14 - aus den Rasten, so dass der Eingriff der Zähne 12b und damit auch die Verriegelung der Sitzschienen 5, 8 gelöst wird. Hierbei erfolgt auch eine gewisse Relativbewegung des Anschlags 15b in Bezug auf die Rastplatten 12 in Sitzlängsrichtung x.

Nach dem Außereingriffgelangen der Rastplatten 12 kann die zweite Sitzschiene 8 relativ zur ersten Sitzschiene 5 verschoben werden. Vorliegend ist die Wegstrecke L2 etwa so bemessen, dass sie der relativen Verschiebung des Anschlags 15b zum Grundträger 15a in Verriegelungsrichtung z entspricht.

Wird der Griff 31 losgelassen, so zieht die Rückstellfeder 34 den Griff 31 wieder in seine Ausgangsstellung und die Zugkraft der Zugfedern 14 und 36 überwiegt, so dass der Anschlag 15b wieder nach oben gezogen wird, wodurch aufgrund der Koppelelemente 15c sich die Längsseiten des Parallelogramms, also Grundträger 15a und Anschlag 15b, wieder annähern und dadurch die Rastplatten 12 wieder einfallen können, so dass die Sitzschienen 5, 8 wieder verriegelt werden.

Die Bewegungsübertragung auf die Verriegelung des zweiten Sitzschienenpaares 5, 8 erfolgt mittels einer zweiten Übertragungsstange 41, welche mit dem zweiten Arm 35b des Antriebselements 35 zugsteif verbunden ist. Ferner entfällt der Griff 31 samt Halteranordnung und Rückstellfeder 34. Ansonsten entspricht der Aufbau und die Funktion dem zuvor beschriebenen, so dass nicht näher hierauf eingegangen wird. Alternativ zur zweiten Übertragungsstange 41 können auch andere Übertragungsmittel vorgesehen sein, wie insbesondere ein Bowdenzug.

Somit wirkt bei beiden Sitzschienenpaaren 5, 8 ein vorliegend vollständig innerhalb der zweiten Sitzschiene 8 angeordnetes Viergelenk als Entriegelungsvorrichtung, bestehend aus Grundträger 15a (oder ggf. der entsprechende Bereich der zweiten Sitzschiene 8 im Falle einer direkten Befestigung an derselben), dem Anschlag 15b und den beiden Koppelelementen 15c, welche vorliegend in Gestalt eines Parallelogramms angeordnet sind.

Die Aktivierung erfolgt mittels einer relativen Verschiebung der Längsseiten des Viergelenks, wodurch sich zwangsläufig die kurzen Seiten aufrichten und die Längsseiten auseinanderdrücken. Entsprechend erfolgt die Deaktivierung durch eine relative Verschiebung in entgegengesetzter Richtung, wodurch sich die kurzen Seiten legen und die Längsseiten sich aufeinander zu bewegen.

Gemäß einer nicht in der Zeichnung dargestellten, alternativen Ausgestaltung des ersten Ausführungsbeispiels ist die Funktion der Koppelelemente und der zweiten Zugfedern kombiniert. So sind die Koppelelemente schenkelfederartig ausgebildet, wobei ein Schenkel am Grundträger (oder am Anschlag) angebracht ist und der zweite Schenkel das entsprechende Koppelelement bildet.

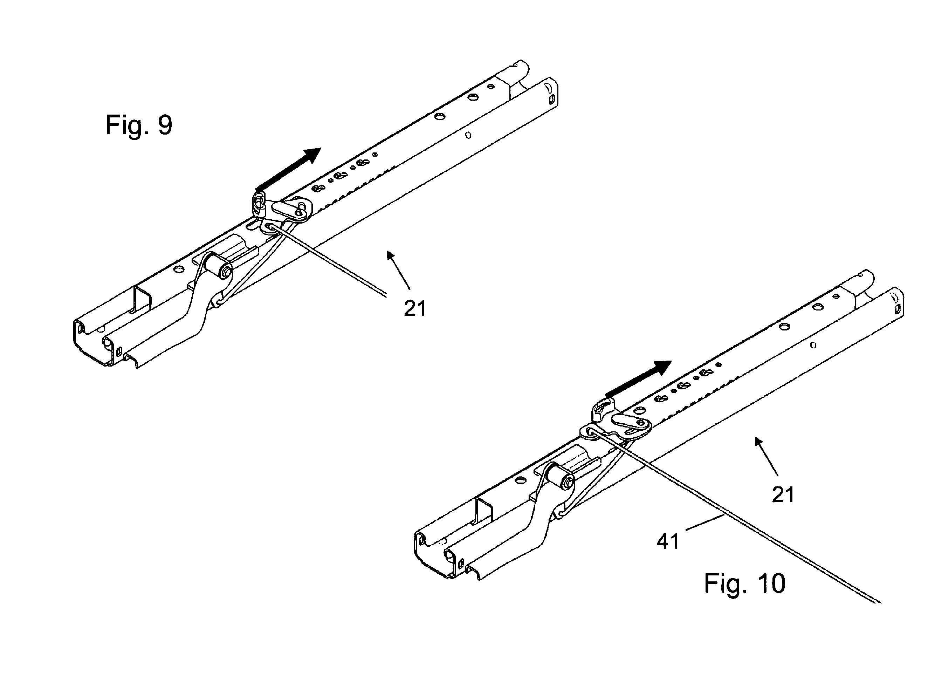

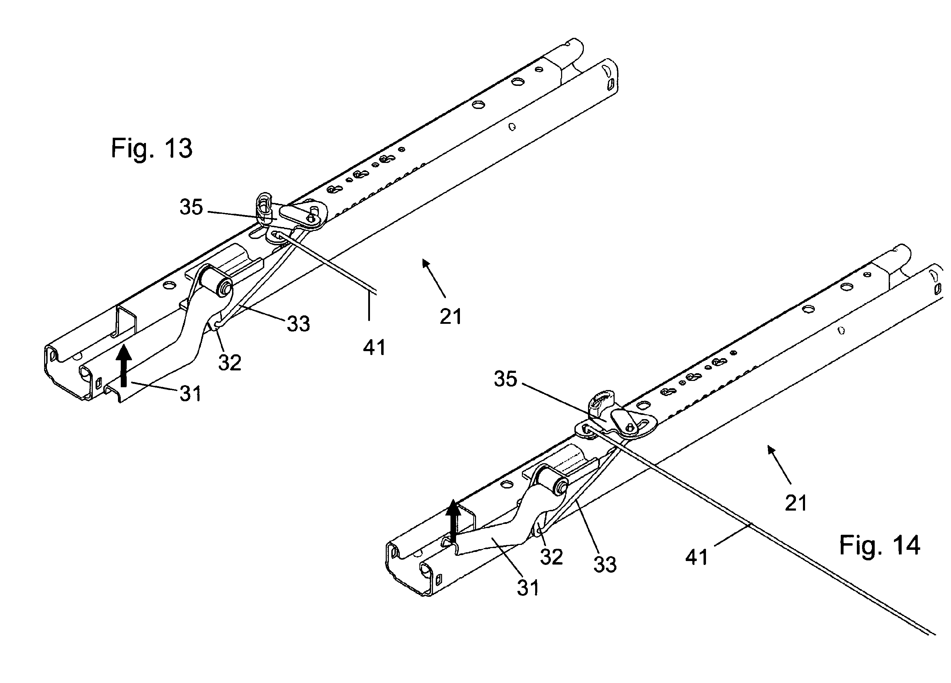

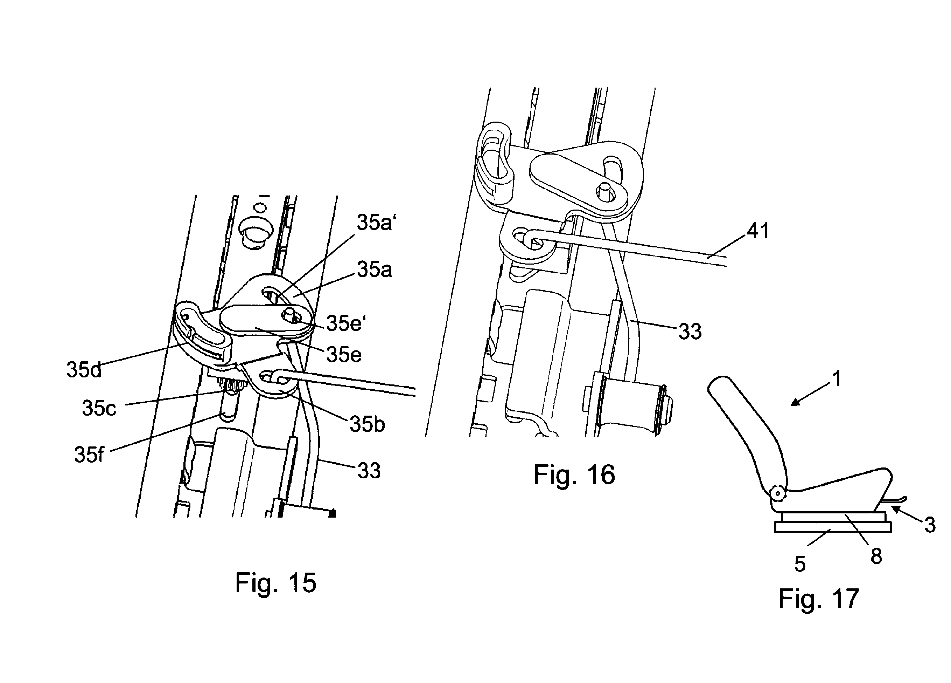

Im Folgenden wird unter Bezugnahme auf die Figuren 9 - 16 das zweite Ausführungsbeispiel näher erläutert. Gleiche oder gleichwirkende Elemente sind im Folgenden mit den gleichen Bezugszeichen versehen. Hierbei entspricht das Grundprinzip der Entriegelung mittels eines Viergelenks dem anhand des ersten Ausführungsbeispiels beschriebenen, so dass nicht mehr im Detail hierauf eingegangen wird.

Im Unterschied zum ersten Ausführungsbeispiel ist das Antriebselement 35 am Sitzschienenpaar 5, 8 auf der Griffseite in seinem nach außen ragenden Bereich modifiziert. Ferner sind Zusatzfunktionen vorgesehen, wie insbesondere ein Entriegeln der Sitzschienen 5, 8 auf beiden Seiten, wenn die Lehne des Fahrzeugsitzes 1 für ein Einnehmen einer Easy-Entry-Stellung nach vorn geklappt wird, sowie eine Memory-Funktion zum automatischen Wiederauffinden der ursprünglichen Sitzstellung nach einem Einnehmen der Easy-Entry-Stellung, welche nur beim griffseitigen, im Folgenden beschriebenen Sitzschienenpaar 5, 8 vorgesehen ist. Das zweite, nicht näher beschriebene Sitzschienenpaar 5, 8 des zweiten Ausführungsbeispiels entspricht dem entsprechenden Sitzschienenpaar des ersten Ausführungsbeispiels.

Das Antriebselement 35 weist besagten ersten Arm 35a auf, in welchen die erste Übertragungsstange 33 eingreift. Im Unterschied zum ersten Ausführungsbeispiel ist die Eingriffsöffnung 35a' für die erste Übertragungsstange 33 nicht als kreisförmige Öffnung sondern als gekrümmtes Langloch ausgebildet, wofür auch die Armbreite des ersten Arms 35a vergrößert ist.

Auch im zweiten Arm 35b des Antriebselements 35 ist die Öffnung im Unterschied zum ersten Ausführungsbeispiel nicht als kreisförmige Öffnung sondern als Langloch ausgebildet, um ein gewisses Spiel zu ermöglichen. Das Antriebselement (nicht dargestellt) am zweiten Sitzschienenpaar 5, 8 ist jedoch vorliegend entsprechend dem ersten Ausführungsbeispiel ausgebildet. Es ist allerdings auch eine Ausgestaltung entsprechend dem Antriebselement 35 des zweiten Ausführungsbeispiels und wie an späterer Stelle näher erläutert möglich, wenn zum Einnehmen der Easy-Entry-Stellung auch auf dieser Seite ein entsprechendes Übertragungsmittel und ggf. eine Memory-Funktion vorgesehen ist.

Auf der Oberseite des Antriebselements 35 ist eine Einhängung 35d für einen Bowdenzugnippel eines nicht näher dargestellten Bowdenzug vorgesehen, welcher bei einem Vorklappen der Lehne des Fahrzeugsitzes 1 aktiviert wird. Der Bowdenzug bildet somit eine zweite Betätigungseinrichtung, um die Verriegelungsvorrichtung 21 zu lösen. Die Einhängung 35d hat ein geeignetes Spiel, so dass bei einer Betätigung des Antriebselements 35 über den Griff 31 keine oder nur unwesentliche Kräfte auf den Bowdenzug wirken, während bei einem Umklappen der Lehne für ein Einnehmen der Easy-Entry-Stellung das Antriebselement 35 gedreht wird.

Ferner ist auf der Oberseite des Antriebselements 35 ein Signalhebel 35e vorgesehen, welcher an einem Ende verschwenkbar an der Oberseite des Antriebselements 35 angebracht ist, wobei die Schwenkachse des Signalhebels 35e mit der Mittellängsachse des Betätigungsbereichs 35c fluchtet. Am anderen Ende des Signalhebels 35e ist eine Eingriffsöffnung 35e' ausgebildet, in welche die erste Übertragungsstange 33 eingreift, nachdem sie durch die als gekrümmtes Langloch ausgebildete Eingriffsöffnung 35a' im ersten Arm 35a geführt ist. Am unteren Ende des Betätigungsbereichs 35c ist ferner ein Memory-Aktivierungshebel 35f vorgesehen, welcher mit dem Signalhebel 35e drehsteif verbunden und innerhalb des Antriebselements 35 drehbar gelagert ist, d.h. Signalhebel 35e und Memory-Aktivierungshebel 35f sind relativ zum Antriebselement 35 drehbar.

Die Funktion des Antriebselement 35 ist im Falle eines Vorschwenkens der Lehne des Fahrzeugsitzes 1 folgende: Durch das Vorschwenken der Lehne erfolgt eine Aktivierung des Bowdenzugs, so dass der in die Einhängung 35d eingehängte Bowdenzugnippel am Antriebselement 35 zieht und dasselbe dreht, wobei die Drehbewegung des Antriebselements 35 aufgrund der Wirkung der schienenfesten Verzahnung am Grundträger 15a von einer Längsbewegung überlagert ist.

Die Dreh-Längsbewegung wird vom mit der Verzahnung versehenen Betätigungsbereich 35c entsprechend dem ersten Ausführungsbeispiel übertragen, so dass das Viergelenk aktiviert wird, d.h. die Längsseiten des Parallelogramms werden relativ zueinander verschoben und aufgrund der Koppelelemente 15c auseinanderbewegt, so dass die Rastplatten 12 nach unten gedrückt werden und die Sitzschienen 5, 8 entriegelt werden. Dadurch, dass die erste Übertragungsstange 33 mit ihrem Ende durch die als gekrümmtes Langloch ausgebildete Eingriffsöffnung 35a' ragt, erfolgt bei einer Drehbewegung des Antriebselements 35 keine Kraftübertragung auf die erste Übertragungsstange 33 und damit den Griff 31.

Der Signalhebel 35e verbleibt aufgrund des Längsbewegungsanteils der Dreh-Längsbewegung des Antriebselements 35 nicht ganz in seiner Ausgangsstellung. Hierbei gelangt er innerhalb des Bereichs der Eingriffsöffnung 35a' von einer Seite des ersten Arms 35a auf die andere Seite des ersten Arms 35a und wird unwesentlich entgegen der Drehrichtung des Antriebselements 35 verdreht.

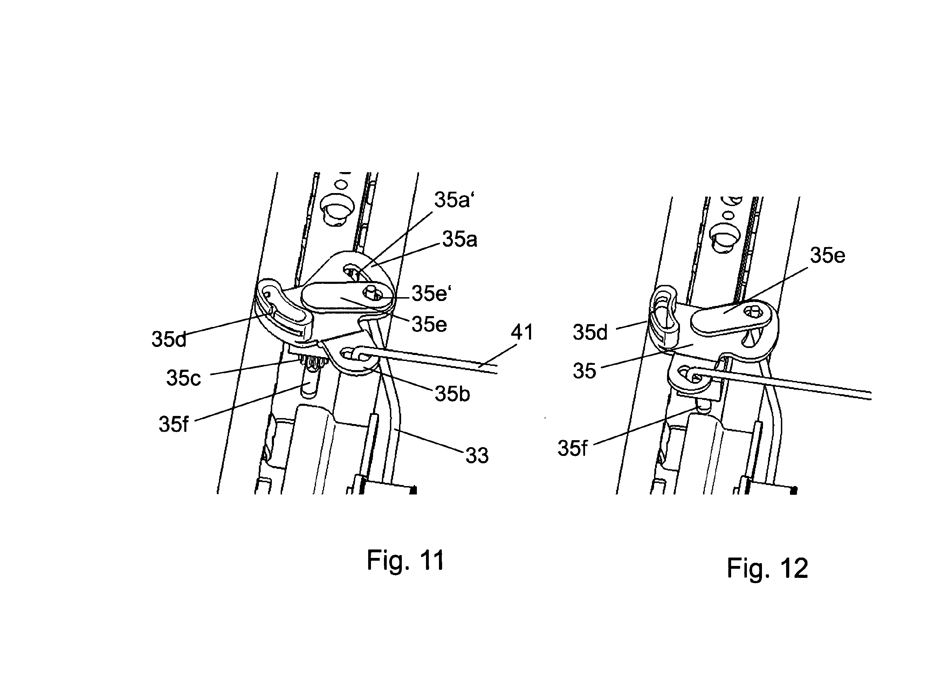

Diese Drehbewegung wird auch auf den Memory-Aktivierungshebel 35f übertragen, wie aus Fig. 12 ersichtlich. Diese Bewegung bewirkt vorliegend ein Nichtmitnehmen eines Memory-Elements, so dass die aktuelle Sitzlängsposition auf mechanische Weise gespeichert wird und beim Rückfahren des Fahrzeugsitzes 1 zum Verriegeln der Sitzschienenpaare 5, 8 automatisch die Ausgangsstellung wieder eingenommen wird. Die Bewegung kann jedoch für eine beliebige andere Memory-Vorrichtung genutzt werden.

Die Verriegelungsvorrichtung 21 des zweiten Sitzschienenpaares 5, 8 sieht entsprechend der des ersten Sitzschienenpaares des ersten Ausführungsbeispiels aus. Das Lösen derselben erfolgt aufgrund der Übertragung durch die zweite Übertragungsstange 41.

Im Falle eines manuellen Lösens der Verriegelungsvorrichtung 21 mittels Betätigung des Griffs 31 entspricht die Funktion derjenigen des ersten Ausführungsbeispiels, wobei bei der Aktivierung des Antriebselements 35 durch Ziehen an der ersten Übertragungsstange 33 der Signalhebel 35e und damit auch der Memory-Aktivierungshebel 35f mitgenommen wird.

Diese Mitnahme des Signalhebels 35e bewirkt ein Drehen des Memory-Aktivierungshebels 35f, welcher in gleicher Richtung wie das Antriebselement 35 gedreht wird. Vorliegend nimmt der Memory-Aktivierungshebel 35f das Memory-Element mit, d.h. es ergibt sich ein "Reset" der Memory-Vorrichtung.

Es ist in alternativer Ausgestaltung auch ein Entriegeln des Sitzschienenpaares 5, 8 beim Vorklappen der Lehne mittels einer Aktivierung über einen Bowdenzug möglich, entsprechend der vorstehend beschriebenen Aktivierung gemäß dem zweiten Ausführungsbeispiel.

Eine Memory-Funktion kann auch beim zweiten Sitzschienenpaar vorgesehen sein, in der Regel wird sie jedoch nur bei einem der beiden Sitzschienenpaare vorgesehen.

Obwohl vorstehend in beiden Ausführungsbeispielen ein Grundträger 15a vorgesehen ist, welcher Teil der Verriegelungsvorrichtung 21 ist, kann der Grundträger 15a im Prinzip auch entfallen und dessen Funktion direkt durch eine entsprechende Ausgestaltung der zweiten Sitzschiene 8 übernommen werden.

**Bezugszeichenliste**

| | | | |
|---|---|---|---|
| 1 | Fahrzeugsitz | 36 | zweite Zugfeder |
| 3 | Längseinsteller | 41 | zweite Übertragungsstange |
| 5 | erste Sitzschiene | L1 | erste Wegstrecke |
| 8 | zweite Sitzschiene | L2 | zweite Wegstrecke |
| 8a | Führungsöffnung | x | Sitzlängsrichtung |
| 12 | Rastplatte | y | Querrichtung |
| 12a | Grundkörper | z | Verriegelungsrichtung |
| 12b | Zahn | | |
| 12c | Führungsstift | | |
| 14 | Zugfeder | | |
| 15a | Grundträger | | |
| 15a' | Führungsöffnung | | |
| 15a'' | Öffnung | | |
| 15a''' | Verzahnung | | |
| 15b | Anschlag | | |
| 15b'' | Öffnung | | |
| 15b''' | Verzahnung | | |
| 15c | Koppelelement | | |
| 21 | Verriegelungsvorrichtung | | |
| 31 | Griff | | |
| 32 | Hebelarm | | |
| 33 | erste Übertragungsstange | | |
| 34 | Rückstellfeder | | |
| 35 | Antriebselement | | |
| 35a | erster Arm | | |
| 35a' | Eingriffsöffnung | | |
| 35b | zweiter Arm | | |
| 35c | Betätigungsbereich | | |
| 35d | Einhängung | | |
| 35e | Signalhebel | | |
| 35e' | Eingriffsöffnung | | |
| 35f | Memory-Aktivierungshebel | | |

## Patentansprüche

1. Längseinsteller (3) für einen Fahrzeugsitz (1), aufweisend
ein Sitzschienenpaar (5, 8),
mit einer strukturfesten ersten Sitzschiene (5),
einer in dieser ersten Sitzschiene (5) geführten, mit dem Fahrzeugsitz (1) verbundenen zweiten Sitzschiene (8),
eine lösbaren Verriegelungsvorrichtung (21) mit mindestens einer Rastplatte (12) zum lösbaren Verriegeln der Position der ersten Sitzschiene (5) gegenüber der zweiten Sitzschiene (8),
**dadurch gekennzeichnet, dass**
ein Viergelenk (15a-15c-15b-15c) innerhalb der zweiten Sitzschiene (8) vorgesehen ist, welches mit der oder den Rastplatten (12) zum Entriegeln des Längseinstellers (3) zusammenwirkt.

2. Längseinsteller nach Anspruch 1, **dadurch gekennzeichnet, dass** das Viergelenk (15a-15c-15b-15c) parallelogrammförmig ist, wobei eine Seite schienenfest in Bezug auf die zweite Sitzschiene (8) ist und die hierzu parallele Seite mit der oder den Rastplatten (12) zusammenwirkt.

3. Längseinsteller nach Anspruch 1 oder 2, **dadurch gekennzeichnet, dass** das Viergelenk (15a-15c-15b-15c) zwei mit einem Ende schienenfeste Koppelelemente (15c) und einen an den anderen Enden der Koppelelemente (15c) angeordneten Anschlag (15b) aufweist, welcher zumindest in Sitzlängsrichtung (x) relativ zu der oder den Rastplatten (12) beweglich ist.

4. Längseinsteller nach Anspruch 3, **dadurch gekennzeichnet, dass** der Anschlag (15b) zum Lösen der Verriegelungsvorrichtung (21) mit den Rastplatten (12) zusammenwirkt und dieselben von der Seite der zweiten Sitzschiene (8) her außer Eingriff mit der ersten Sitzschiene (5) drückt.

5. Längseinsteller nach einem der vorhergehenden Ansprüche, **dadurch gekennzeichnet, dass** die Betätigung des Viergelenks (15a-15c-15b-15c) über eine Getriebeverbindung erfolgt, welche einen Betätigungsbereich (35c) mit einer Außenverzahnung und zwei Langlöcher mit auf entgegengesetzten Seiten angeordneten Verzahnungen (15a"', 15b"') aufweist, und die Verzahnungen (15a"', 15b'") mit der Außenverzahnung des Betätigungsbereichs (35c) in Eingriff stehen.

6. Längseinsteller nach einem der vorhergehenden Ansprüche, **dadurch gekennzeichnet, dass** das Viergelenk (15a-15c-15b-15c) einen Grundträger (15a), der an der zweiten Sitzschiene (8) fest angebracht ist, zwei Koppelelemente (15c), die verschwenkbar mit dem Grundträger (15a) verbunden sind, und einen Anschlag (15b), der ebenfalls verschwenkbar mit den Koppelelementen (15b) verbunden ist, aufweist, wobei der Anschlag (15b) mittels Zugfedern (36) von unten gegen den Grundträger (15a) vorgespannt ist.

7. Längseinsteller nach einem der vorhergehenden Ansprüche, **dadurch gekennzeichnet, dass** der Längseinsteller (3) eine Memory-Vorrichtung aufweist, welche bei einem Entriegeln der Verriegelungsvorrichtung (21) über eine zweite Betätigungseinrichtung aktiviert wird.

8. Längseinsteller nach Anspruch 7, **dadurch gekennzeichnet, dass** für die Aktivierung der Memory-Vorrichtung eine Drehbewegung genutzt wird, die koaxial zur Drehachse durch ein Antriebselement (35) hindurch übertragen wird, wobei das Antriebselement (35) eine Betätigung des Viergelenks (15a-15c-15b-15c) bewirkt.

9. Längseinsteller nach Anspruch 7, **dadurch gekennzeichnet, dass** die zweite Betätigungseinrichtung für die Memory-Vorrichtung mit einem Signalhebel (35e) zusammenwirkt, der mit einer im Antriebselement (35) gelagerten Welle und einem Memory-Aktivierungshebel (35f) zusammenwirkt.

10. Fahrzeugsitz (1) **gekennzeichnet, durch** mindestens einen Längseinsteller (3) nach einem der vorhergehenden Ansprüche.

## Claims

1. Longitudinal adjuster (3) for a vehicle seat (1) having
a seat rail pair (5, 8),
having a first seat rail (5) fixed to a structure,
a second seat rail (8) which is guided in that first seat rail (5) and which is connected to the vehicle seat (1),
a releasable locking device (21) having at least one catch plate (12) for releasably locking the position of the first seat rail (5) relative to the second seat rail (8),
**characterized in that**
a four-bar linkage (15a-15c-15b-15c) which cooperates with the catch plate (s) (12) in order to unlock the longitudinal adjuster (3) is provided within the second seat rail (8).

2. Longitudinal adjuster according to Claim 1, **characterized in that** the four-bar linkage (15a-15c-15b-15c) is in the form of a parallelogram, wherein one side is secured to a rail in relation to the second seat rail (8) and the side parallel therewith cooperates with the catch plate(s) (12).

3. Longitudinal adjuster according to Claim 1 or Claim 2, **characterized in that** the four-bar linkage (15a-15c-15b-15c) has two coupling elements (15c) which are secured to a rail at one end and a stop (15b) which is arranged at the other ends of the coupling elements (15c) and which is movable at least in the longitudinal seat direction (x) relative to the catch plate(s) (12).

4. Longitudinal adjuster according to Claim 3, **characterized in that** the stop (15b) cooperates with the catch plates (12) in order to release the locking device (21) and presses the catch plates out of engagement with the first seat rail (5) from the side of the second seat rail (8).

5. Longitudinal adjuster according to one of the preceding claims, **characterized in that** the actuation of the four-bar linkage (15a-15c-15b-15c) is carried out via a gear connection which has an actuation region (35c) having an outer tooth arrangement and two elongate holes having tooth arrangements (15a''', 15b"') arranged at opposite sides, and the tooth arrangements (15a"', 15b"') are in engagement with the outer tooth arrangement of the actuation region (35c).

6. Longitudinal adjuster according to one of the preceding claims, **characterized in that** the four-bar linkage (15a-15c-15b-15c) has a base carrier (15a) which is securely fitted to the second seat rail (8), two coupling elements (15c) which are pivotably connected to the base carrier (15a) and a stop (15b) which is also connected pivotably to the coupling elements (15c), wherein the stop (15b) is pretensioned by means of tension springs (36) from below against the base carrier (15a).

7. Longitudinal adjuster according to one of the preceding claims, **characterized in that** the longitudinal adjuster (3) has a memory device which is activated by means of a second actuation device when the locking device (21) is unlocked.

8. Longitudinal adjuster according to Claim 7, **characterized in that** a rotational movement which is transmitted coaxially relative to the axis of rotation through a drive element (35) is used for activating the memory device, wherein the drive element (35) brings about actuation of the four-bar linkage (15a-15c-15b-15c).

9. Longitudinal adjuster according to Claim 7, **characterized in that** the second actuation device for the memory device cooperates with a signal lever (35e) which cooperates with a shaft supported in the drive element (35) and a memory activation lever (35f).

10. Vehicle seat (1) **characterized by** at least one longitudinal adjuster (3) according to one of the preceding claims.

## Revendications

1. Système de réglage de longueur (3) pour un siège de véhicule (1), présentant
une paire de rails de siège (5, 8),
avec un premier rail de siège (5) fixé à la structure,
avec un deuxième rail de siège (8) attaché au siège de véhicule (1), guidé dans ce premier rail de siège (5),
un dispositif de verrouillage libérable (21) avec au moins une plaque d'encliquetage (12) pour le verrouillage libérable de la position du premier rail de siège (5) par rapport au deuxième rail de siège (8),
**caractérisé en ce qu'**il est prévu un quadrilatère articulé (15a-15c-15b-15c) à l'intérieur du deuxième rail de siège (8), qui coopère avec la ou les plaque(s) d'encliquetage (12) pour déverrouiller le système de réglage de longueur (3).

2. Système de réglage de longueur selon la revendication 1, **caractérisé en ce que** le quadrilatère articulé (15a-15c-15b-15c) est en forme de parallélogramme, dans lequel un côté est fixé au rail par rapport au deuxième rail de siège (8) et le coté parallèle à celui-ci coopère avec la ou les plaque(s) d'encliquetage (12).

3. Système de réglage de longueur selon la revendication 1 ou 2, **caractérisé en ce que** le quadrilatère articulé (15a-15c-15b-15c) présente deux éléments de couplage (15c) fixés au rail avec une extrémité et une butée (15b) disposée aux autres extrémités des éléments de couplage (15c), qui est mobile par rapport à la ou aux plaque(s) d'encliquetage (12) au moins dans la direction longitudinale (x) du siège.

4. Système de réglage de longueur selon la revendication 3, **caractérisé en ce que** la butée (15b) coopère avec les plaques d'encliquetage (12) pour la libération du dispositif de verrouillage (21) et pousse celles-ci à partir du côté du deuxième rail de siège (8) hors d'engagement avec le premier rail de siège (5).

5. Système de réglage de longueur selon l'une quelconque des revendications précédentes, **caractérisé en ce que** l'actionnement du quadrilatère articulé (15a-15c-15b-15c) est effectué par une liaison de transmission, qui présente une zone d'actionnement (35c) avec une denture extérieure et deux trous oblongs avec des dentures (15a"', 15b"') disposées sur des côtés opposés, et les dentures (15a"', 15b"') sont en prise avec la denture extérieure de la zone d'actionnement (35c).

6. Système de réglage de longueur selon l'une quelconque des revendications précédentes, **caractérisé en ce que** le quadrilatère articulé (15a-15c-15b-15c) présente un support de base (15a), qui est monté de façon fixe sur le deuxième rail de siège (8), deux éléments de couplage (15c), qui sont reliés de façon pivotante au support de base (15a), et une butée (15b), qui est également reliée de façon pivotante aux éléments de couplage (15c), dans lequel la butée (15b) est précontrainte par le bas contre le support de base (15a) au moyen de ressorts de traction (36).

7. Système de réglage de longueur selon l'une quelconque des revendications précédentes, **caractérisé en ce que** le système de réglage de longueur (3) présente un dispositif de mémoire, qui est activé au moyen d'un deuxième dispositif d'actionnement lors d'un déverrouillage du dispositif de verrouillage (21).

8. Système de réglage de longueur selon la revendication 7, **caractérisé en ce que**, pour l'activation du dispositif de mémoire, on utilise un mouvement de rotation, qui est transmis coaxialement à l'axe de rotation à travers un élément d'entraînement (35), dans lequel l'élément d'entraînement (35) provoque un actionnement du quadrilatère articulé (15a-15c-15b-15c).

9. Système de réglage de longueur selon la revendication 7, **caractérisé en ce que** le deuxième dispositif d'actionnement pour le dispositif de mémoire coopère avec un levier de signal (35e), qui coopère avec un arbre monté dans l'élément d'entraînement (35) et un levier d'activation de mémoire (35f).

10. Siège de véhicule (1), **caractérisé par** au moins un système de réglage de longueur (3) selon l'une quelconque des revendications précédentes.
